(19) **Europäisches Patentamt / European Patent Office / Office européen des brevets**

(11) **EP 2 541 199 B1**

(12) **FASCICULE DE BREVET EUROPEEN**

(45) Date de publication et mention
de la délivrance du brevet:
**12.07.2017 Bulletin 2017/28**

(51) Int Cl.:
*G01C 21/16* [(2006.01)]   *B64G 1/24* [(2006.01)]
*G01C 21/08* [(2006.01)]   *F41G 7/00* [(2006.01)]
*B64G 1/28* [(2006.01)]   *B64G 1/36* [(2006.01)]

(21) Numéro de dépôt: **12173874.4**

(22) Date de dépôt: **27.06.2012**

(54) **Engin spatial muni d'un dispositif d'estimation de son vecteur vitesse par rapport à un référentiel inertiel et procédé d'estimation correspondant**

Raumschiff, das mit einer Vorrichtung zum Schätzen seines Geschwindigkeitsvektors in Bezug auf ein Inertialsystem ausgestattet ist, und entsprechendes Schätzverfahren

Spacecraft provided with a device for estimating its velocity vector with respect to an inertial frame and corresponding estimation method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2011 FR 1101999**

(43) Date de publication de la demande:
**02.01.2013 Bulletin 2013/01**

(73) Titulaires:
- **CENTRE NATIONAL D'ETUDES SPATIALES**
  **75001 Paris (FR)**
- **SYSNAV**
  **27200 Vernon (FR)**

(72) Inventeurs:
- **Petit, Nicolas**
  **92330 Sceaux (FR)**

- **Praly, Nicolas**
  **76000 Rouen (FR)**
- **Vissiere, David**
  **27200 Vernon (FR)**
- **Laurent-Varin, Julien**
  **91600 Savigny Sur Orge (FR)**

(74) Mandataire: **Lavoix**
**2, place d'Estienne d'Orves**
**75441 Paris Cedex 09 (FR)**

(56) Documents cités:
**EP-A1- 2 048 475   FR-A1- 2 914 739**

- **PRALY NICOLAS ET AL: "Using distributed magnetometry in navigation of heavy launchers and space vehicles", 4TH EUROPEAN CONFERENCE FOR AEROSPACE SCIENCES (EUCASS), 30 août 2011 (2011-08-30), XP055019418,**

**Description**

La présente invention concerne un engin spatial muni d'un dispositif d'estimation d'un vecteur vitesse de l'engin spatial par rapport à un référentiel inertiel, le dispositif d'estimation comprenant au moins un gyromètre embarqué à bord de l'engin spatial et propre à mesurer un vecteur vitesse instantanée de rotation de l'engin spatial par rapport au référentiel inertiel.

Dans le domaine de la navigation spatiale, il est essentiel de connaître à chaque instant avec précision la vitesse d'un engin spatial par rapport à un référentiel inertiel. Dans le cas d'un lanceur spatial, destiné par exemple à envoyer dans l'espace, et en particulier à mettre sur orbite, une charge utile telle qu'une sonde ou un satellite, la vitesse du lanceur spatial est un paramètre essentiel intervenant dans le calcul de la trajectoire et sa connaissance précise est indispensable pour la commande dynamique de la trajectoire du lanceur.

Actuellement, la vitesse par rapport à un référentiel inertiel est obtenue par intégration par rapport au temps de l'accélération de l'engin, l'accélération étant estimée à partir de mesures réalisées par des accéléromètres et des gyromètres embarqués sur l'engin spatial. Une telle méthode de détermination ne donne cependant pas entière satisfaction. En effet, du fait de l'intégration, la valeur de la vitesse obtenue est entachée d'une erreur qui augmente linéairement avec le temps. La vitesse déterminée par cette méthode présente donc l'inconvénient d'avoir une précision qui diminue avec le temps. Elle est donc d'autant moins précise que le temps de vol de l'engin est long.

EP 2 048 475 décrit un dispositif de détermination de la vitesse d'un engin, par application d'un facteur de correction à une vitesse prédite à partir d'un modèle mécanique. Le facteur de correction est calculé par comparaison entre le champ magnétique connu dans le repère inertiel et le champ magnétique mesuré par l'engin.

FR 2 914 739 décrit un procédé d'estimation de la cinématique d'un corps se déplaçant sur la terre en utilisant les variations du champ magnétique.

Un but de l'invention est de fournir un dispositif et une méthode associée d'estimation de la vitesse d'un engin spatial qui permette d'obtenir à tout instant une valeur précise de la vitesse indépendamment du temps de vol de l'engin.

A cet effet, l'invention a pour objet un engin spatial du type précité, selon la revendication 1. L'engin spatial est caractérisé en ce que le dispositif d'estimation comprend en outre un réseau de magnétomètres liés à l'engin spatial et espacés spatialement, propre à mesurer, dans un référentiel lié à l'engin spatial, un vecteur champ magnétique produit par un astre, le vecteur champ magnétique produit par l'astre étant stationnaire dans un référentiel lié à l'astre et un calculateur, configuré pour estimer le vecteur vitesse de l'engin spatial par résolution d'une équation reliant le vecteur vitesse de l'engin spatial par rapport au référentiel inertiel au vecteur vitesse instantanée de rotation de l'engin spatial par rapport au référentiel inertiel, au vecteur champ magnétique produit par l'astre, à la dérivée temporelle et au gradient spatial du vecteur champ magnétique produit par l'astre, à un vecteur position de l'engin spatial par rapport au centre du référentiel inertiel et à un vecteur vitesse de rotation du référentiel lié à l'astre par rapport au référentiel inertiel.

L'engin spatial selon l'invention peut comprendre l'une ou plusieurs des caractéristiques suivantes, prise(s) isolément ou suivant toute(s) combinaison(s) techniquement possible(s) :

- le calculateur est configuré pour estimer le vecteur vitesse de l'engin spatial par résolution de l'équation :

$$\left.\frac{d\vec{B}^{RL}}{dt}\right|_{RL} = -\left(\vec{\Omega}^{RL}_{RL/RI} + \vec{\Omega}^{RL}_{RI/RT}\right) \wedge \vec{B}^{RL} + \left[\frac{\partial B}{\partial X}\right]^{RL} \left.\frac{d\vec{X}^{RL}}{dt}\right|_{RI} + \left[\frac{\partial B}{\partial X}\right]^{RL}\left(\vec{\Omega}^{RL}_{RI/RT} \wedge \vec{X}^{RL}_{RI}\right)$$

où

$\vec{\Omega}^{RL}_{RL/RI}$ est le vecteur vitesse instantanée de rotation de l'engin spatial par rapport au référentiel inertiel exprimé dans le référentiel lié à l'engin spatial, obtenu à partir des mesures réalisées par le gyromètre ;

$\vec{B}^{RL}$ est le vecteur champ magnétique exprimé dans le référentiel lié à l'engin spatial obtenu à partir des mesures réalisées par au moins l'un des magnétomètres ; $\left.\frac{d\vec{B}^{RL}}{dt}\right|_{RL}$ est la dérivée temporelle du vecteur champ magnétique exprimée dans le référentiel lié à l'engin spatial et déduite du vecteur champ magnétique mesuré par au moins l'un des magnétomètres ;

$\left[\frac{\partial B}{\partial X}\right]^{RL}$ est le gradient spatial du vecteur champ magnétique exprimé dans le référentiel lié à l'engin spatial et déduit du vecteur champ magnétique mesuré par le réseau de magnétomètres ;

$-\overrightarrow{\Omega}_{RI/RT}^{RL}$ est le vecteur vitesse de rotation du référentiel lié à l'astre par rapport au référentiel inertiel exprimé dans le référentiel lié à l'engin spatial; et

$\vec{X}_{RI}^{RL}$ est le vecteur position de l'engin spatial par rapport au centre du référentiel inertiel exprimé dans le référentiel lié à l'engin spatial ;

- le dispositif d'estimation comprend en outre un accéléromètre, propre à mesurer un vecteur accélération spécifique de l'engin spatial par rapport au référentiel lié à l'engin spatial, le calculateur est propre à estimer un vecteur accélération spécifique de l'engin spatial par rapport au référentiel inertiel à partir des mesures réalisées par l'accéléromètre et par le gyromètre et le calculateur est configuré pour estimer le vecteur position de l'engin spatial par rapport au centre du référentiel inertiel par double intégration du vecteur accélération spécifique de l'engin spatial par rapport au référentiel inertiel compensé par l'accélération due à la gravité ;
- l'engin spatial est un lanceur spatial ;
- l'astre est la Terre, et le champ magnétique est le champ magnétique terrestre ;
- le référentiel lié à l'astre est un référentiel équatorial géocentrique tournant avec la Terre comprenant une origine coïncidant avec le centre de masse de la Terre, un axe contenu dans le plan de l'équateur et passant par un point d'intersection de l'équateur avec un méridien de référence, un axe coïncidant avec l'axe de rotation terrestre moyen et un axe complétant de manière directe le référentiel lié à la Terre et le référentiel inertiel est un référentiel géocentrique équatorial inertiel comprenant une origine coïncidant avec le centre de masse de la Terre et comprenant un axe pointant vers une étoile lointaine fixe, un axe coïncidant avec l'axe de rotation terrestre moyen et un axe pointant vers une étoile lointaine fixe et complétant de manière directe le référentiel inertiel ;
- le réseau de magnétomètres comprend quatre magnétomètres, la localisation des magnétomètres sur l'engin spatial étant choisie de manière à maximiser la distance entre les magnétomètres ;
- les magnétomètres sont disposés aux sommets d'un polyèdre ;
- le dispositif d'estimation comprend un accéléromètre, propre à mesurer un vecteur accélération spécifique de l'engin spatial par rapport au référentiel lié à l'engin spatial, le calculateur est propre à estimer un vecteur accélération spécifique de l'engin spatial par rapport au référentiel inertiel à partir des mesures réalisées par l'accéléromètre et par le gyromètre et le calculateur est configuré pour estimer un deuxième vecteur vitesse de l'engin spatial par rapport au référentiel inertiel par intégration du vecteur accélération spécifique de l'engin spatial par rapport au référentiel inertiel compensé par l'accélération due à la gravité, le calculateur est en outre configuré pour combiner selon un algorithme prédéterminé le deuxième vecteur vitesse et le vecteur vitesse estimé à partir de la mesure du champ magnétique produit par l'astre pour en déduire un vecteur vitesse corrigé de l'engin spatial.

L'invention a également pour objet un procédé d'estimation d'un vecteur vitesse par rapport à un référentiel inertiel d'un engin spatial tel que décrit précédemment, selon la revendication 10. Le procédé étant caractérisé en ce qu'il comprend les étapes de :

- déterminer le vecteur vitesse instantanée de rotation de l'engin spatial par rapport au référentiel inertiel à partir des mesures réalisées par le gyromètre ;
- déterminer le vecteur champ magnétique produit par l'astre à l'aide des mesures réalisées par le réseau de magnétomètres ;
- estimer le vecteur position de l'engin spatial par rapport au centre du référentiel inertiel;
- estimer le vecteur vitesse de l'engin spatial par rapport au référentiel inertiel par résolution d'une équation reliant le vecteur vitesse de l'engin spatial par rapport au référentiel inertiel au vecteur position de l'engin spatial par rapport au centre du référentiel inertiel, au vecteur vitesse instantanée de rotation de l'engin spatial par rapport au référentiel inertiel, au vecteur vitesse de rotation du référentiel lié à l'astre par rapport au référentiel inertiel, au vecteur champ magnétique produit par l'astre, à la dérivée temporelle et au gradient spatial du vecteur champ magnétique produit par l'astre.

Selon des modes particuliers de réalisation du procédé d'estimation :

- on estime le vecteur vitesse de l'engin spatial par rapport au référentiel inertiel par résolution de l'équation :

$$\frac{d\vec{B}^{RL}}{dt}\bigg|_{RL} = -\left(\vec{\Omega}^{RL}_{RL/RI} + \vec{\Omega}^{RL}_{RI/RT}\right) \wedge \vec{B}^{RL} + \left[\frac{\partial B}{\partial X}\right]^{RL}\frac{d\vec{X}^{RL}}{dt}\bigg|_{RI} + \left[\frac{\partial B}{\partial X}\right]^{RL}\left(\vec{\Omega}^{RL}_{RI/RT} \wedge \vec{X}^{RL}_{RI}\right)$$

où $\vec{\Omega}^{RL}_{RL/RI}$

est le vecteur vitesse instantanée de rotation de l'engin spatial par rapport au référentiel inertiel exprimé dans le référentiel lié à l'engin spatial, obtenu à partir des mesures réalisées par le gyromètre ;

$\vec{B}^{RL}$ est le vecteur champ magnétique exprimé dans le référentiel lié à l'engin spatial obtenu à partir des mesures réalisées par au moins l'un des magnétomètres ;

$\dfrac{d\vec{B}^{RL}}{dt}\bigg|_{RL}$ est la dérivée temporelle du vecteur champ magnétique exprimée dans le référentiel lié à l'engin spatial et déduite du vecteur champ magnétique mesuré par au moins l'un des magnétomètres ;

$\left[\dfrac{\partial B}{\partial X}\right]^{RL}$ est le gradient spatial du vecteur champ magnétique exprimé dans le référentiel lié à l'engin spatial et déduit du vecteur champ magnétique mesuré par le réseau de magnétomètres ;

$-\vec{\Omega}^{RL}_{RI/RT}$ est le vecteur vitesse de rotation du référentiel lié à l'astre par rapport au référentiel inertiel exprimé dans le référentiel lié à l'engin spatial ; et

$\vec{X}^{RL}_{RI}$ est le vecteur position de l'engin spatial par rapport au centre du référentiel inertiel exprimé dans le référentiel lié à l'engin spatial ;

L'invention a également pour objet un procédé de détermination d'un vecteur vitesse corrigé d'un engin spatial tel que décrit précédemment, comprenant les étapes de :

- estimer un premier vecteur vitesse de l'engin spatial en mettant en oeuvre le procédé d'estimation ;
- estimer un deuxième vecteur vitesse de l'engin spatial à partir du vecteur accélération spécifique de l'engin spatial par rapport au référentiel lié à l'engin spatial mesuré par l'accéléromètre du dispositif d'estimation ; et
- combiner, en mettant en oeuvre un algorithme prédéterminé, le premier vecteur vitesse estimé et le deuxième vecteur vitesse estimé de l'engin spatial pour en déduire le vecteur vitesse corrigé de l'engin spatial.

L'invention sera mieux comprise à la lecture de la description qui va suivre donnée uniquement à titre d'exemple et faite en se référant aux dessins annexés, sur lesquels :

- la figure 1 est une vue schématique d'un ensemble de référentiels utilisés dans le cadre de l'invention ;
- la figure 2 est une représentation schématique d'un engin spatial muni d'un dispositif d'estimation du vecteur vitesse de l'engin spatial selon l'invention ;
- la figure 3 est une représentation schématique d'un procédé d'estimation du vecteur vitesse de l'engin spatial ;
- la figure 4 est un graphique illustrant l'évolution en fonction du temps de l'erreur entachant le vecteur vitesse estimé suivant différents procédés ; et
- la figure 5 est une représentation schématique d'un procédé d'estimation d'un vecteur vitesse corrigé de l'engin spatial.

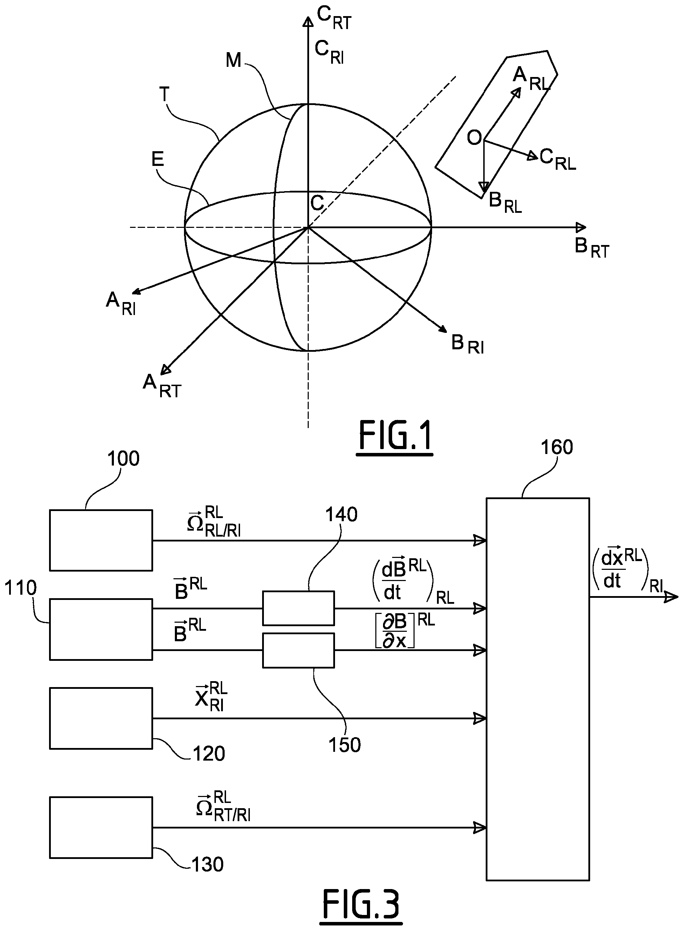

La figure 1 illustre de manière schématique un ensemble de référentiels utilisés pour la détermination de la vitesse de l'engin spatial. Ces référentiels comprennent un référentiel lié à la Terre RT, un référentiel inertiel géocentrique RI et un référentiel mobile RL lié à l'engin spatial.

Dans le référentiel inertiel géocentrique RI, le référentiel lié à la Terre RT tourne autour d'un axe de rotation de la Terre sur elle-même (axe des pôles) à une vitesse angulaire égale à la vitesse de rotation de la Terre sur elle-même autour de l'axe des pôles $\Omega_{RT/RI}$. De manière connue, la vitesse de rotation $\Omega_{RT/RI}$ est environ égale à 7,29 x $10^{-5}$ rad/s, c'est-à-dire que la Terre fait un tour sur elle-même en environ 23 heures 56 minutes et 4 secondes.

Dans le mode de réalisation décrit, les référentiels RL, RI et RT sont définis plus précisément comme suit.

Le référentiel RT est fixe par rapport à la Terre. Il tourne avec la Terre. Il s'agit par exemple d'un référentiel équatorial géocentrique tournant avec la Terre. De manière classique, ce référentiel comprend une origine qui est le centre de masse C de la Terre, un axe $A_{RT}$ contenu dans le plan de l'équateur E et passant par le point d'intersection de l'équateur E avec un méridien M de référence, par exemple le méridien correspondant à la longitude de Kourou, un axe $C_{RT}$ coïncidant avec l'axe de rotation terrestre moyen et un axe $B_{RT}$ complétant de manière directe le référentiel RT.

Le référentiel inertiel RI est par exemple un référentiel équatorial géocentrique inertiel. De manière classique, le référentiel équatorial géocentrique inertiel comprend une origine qui est le centre de masse C de la Terre, un axe $A_{RI}$ pointant vers une étoile lointaine fixe, un axe $C_{RI}$ coïncidant avec l'axe de rotation terrestre moyen et avec l'axe $C_{RT}$ du référentiel équatorial géocentrique tournant RT et un axe $B_{RI}$ pointant vers une étoile lointaine fixe et complétant de manière directe le référentiel RI. Les axes $A_{RI}$ et $B_{RI}$ conservent des directions inertielles fixes. Il existe un instant de conjonction où le référentiel inertiel RI coïncide avec le référentiel lié à la Terre RT. L'origine du référentiel inertiel RI coïncide avec l'origine du référentiel RT lié à la Terre.

Le référentiel RL est un référentiel arbitraire lié à la structure de l'engin spatial. Il est fixe par rapport à l'engin spatial et se déplace avec l'engin spatial. Il comprend par exemple une origine O au centre de masse de l'engin spatial 1. Ses axes $A_{RL}$, $B_{RL}$ et $C_{RL}$ forment un trièdre, l'axe $A_{RL}$ étant par exemple confondu avec un axe principal de l'engin, par exemple avec une direction d'allongement de l'engin.

Sur la figure 1, la Terre est désignée par la référence « T ».

Dans la suite, on fait l'hypothèse que le champ magnétique terrestre $\vec{B}$, c'est-à-dire le champ magnétique produit par la Terre, tourne avec la Terre. On suppose donc que le vecteur champ magnétique terrestre $\vec{B}$ est stationnaire dans le référentiel lié à la Terre RT, c'est-à-dire que, dans ce référentiel RT, il est indépendant du temps et ne dépend que de la position par rapport à l'origine du référentiel inertiel RI (qui coïncide avec celle du référentiel RT). En d'autres termes, dans le référentiel RT, le vecteur champ magnétique $\vec{B}$ ne varie pas avec le temps, ce qui s'exprime mathématiquement de la manière suivante : $\left.\dfrac{\partial \vec{B}}{\partial t}\right|_{RT,X} = \vec{0}$ .

Dans cette équation et dans la suite, $\dfrac{\partial}{\partial t}$ désigne la dérivée partielle par rapport au temps et $|_{RT,X}$ permet d'exprimer que la dérivée est effectuée par rapport au référentiel RT à position X constante.

Dans la suite de la description :

- $\dfrac{d}{dt}$ désigne la dérivée temporelle d'une grandeur.

- La notation $\vec{B}^{RL}$ signifie que le vecteur champ magnétique est exprimé suivant les axes du référentiel RL lié à l'engin spatial. Par conséquent le vecteur $\left.\dfrac{d \vec{B}^{RL}}{dt}\right|_{RI}$ représente la dérivée temporelle par rapport au référentiel inertiel RI du vecteur champ magnétique exprimée suivant les axes du référentiel lié à l'engin spatial (RL).

- La notation $\vec{\Omega}_{RL/RI}^{RL}$ représente le vecteur vitesse instantanée de rotation du référentiel RL par rapport au référentiel RI (notation RL/RI) exprimé suivant les axes du référentiel lié à l'engin spatial (exposant RL).

- La notation $\left[\dfrac{\partial B}{\partial X}\right]^{RL}$ représente le gradient spatial du champ magnétique, exprimé dans le référentiel RL.

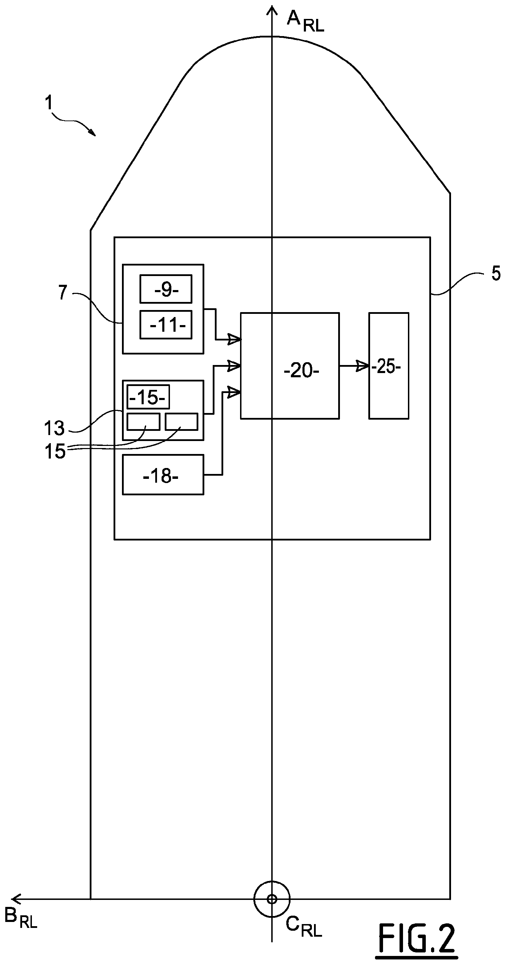

La figure 2 illustre schématiquement un engin spatial 1 équipé d'un dispositif d'estimation 5 de la vitesse de l'engin spatial 1 selon l'invention. L'engin spatial 1 est un lanceur spatial, en particulier une fusée. En variante, il s'agit d'une sonde interplanétaire, d'un satellite ou d'un module de transport, par exemple d'un module de transport pour la station spatiale internationale.

Le dispositif d'estimation 5 comprend une centrale inertielle 7 embarquée dans l'engin spatial 1 et fixée à l'engin spatial 1. La centrale inertielle 7 comprend un gyromètre 9 embarqué dans l'engin spatial 1 et propre à mesurer un vecteur vitesse instantanée de rotation $\vec{\Omega}_{RL/RI}^{RL}$ de l'engin spatial 1 par rapport au référentiel inertiel RI, exprimé dans le référentiel RL. Le gyromètre 9 est propre à effectuer des mesures selon trois axes de mesure formant un trièdre de mesure, en particulier selon les axes $A_{RL}$, $B_{RL}$, $C_{RL}$ du référentiel RL pour déduire le vecteur vitesse instantanée de rotation $\vec{\Omega}_{RL/RI}^{RL}$ de l'engin spatial 1. Le gyromètre 9 est par exemple un gyromètre triaxe ou est formé par un ensemble de trois gyromètres uniaxes dont les axes forment conjointement le trièdre de mesure.

En option, la centrale inertielle 7 comprend un accéléromètre 11 propre à mesurer un vecteur accélération spécifique $\vec{a}_{RL}$ de l'engin spatial 1 par rapport au référentiel lié à l'engin spatial RL. Le vecteur accélération spécifique $\vec{a}_{RL}$ correspond à l'accélération de l'engin spatial 1 moins l'accélération due à la gravité. L'accéléromètre 11 est propre à mesurer l'accélération spécifique $\vec{a}_{RL}$ de l'engin spatial 1 selon trois axes de mesure formant un trièdre de mesure, en particulier selon les trois axes $A_{RL}$, $B_{RL}$, $C_{RL}$ du référentiel RL. L'accéléromètre 11 est par exemple un accéléromètre triaxe ou un ensemble de trois accéléromètres uniaxes dont les axes forment conjointement le trièdre de mesure.

Le dispositif d'estimation 5 comprend en outre un réseau 13 de magnétomètres 15 fixés à l'engin spatial 1 de manière espacée spatialement. Le réseau 13 de magnétomètres 15 est propre à mesurer le vecteur champ magnétique terrestre $\vec{B}^{RL}$ dans le référentiel RL lié à l'engin spatial. Il est en particulier propre à mesurer les composantes du vecteur champ magnétique terrestre $\vec{B}^{RL}$ suivant chacun des axes $A_{RL}$, $B_{RL}$, $C_{RL}$ du référentiel RL lié à l'engin spatial.

Le réseau 13 de magnétomètres 15 est en outre propre, en particulier du fait de sa géométrie, à autoriser la détermination, à chaque instant de mesure des magnétomètres 15, d'un gradient spatial $\left[\dfrac{\partial B}{\partial X}\right]^{RL}$ du vecteur champ magnétique terrestre $\vec{B}^{RL}$, et en particulier des coefficients de ce gradient $\left[\dfrac{\partial B}{\partial X}\right]^{RL}$ selon chacun des axes $A_{RL}$, $B_{RL}$, $C_{RL}$ du référentiel RL lié à l'engin spatial. Chaque coefficient du gradient $\left[\dfrac{\partial B}{\partial X}\right]^{RL}$ est par exemple déterminé par une méthode utilisant les mesures vectorielles du champ magnétique terrestre $\vec{B}$ réalisées par les magnétomètres 15 du réseau 13, associée à des méthodes d'optimisation du type moindre carré ou filtre médian ou associée aux propriétés intrinsèques du champ magnétique décrites par les équations de Maxwell. Cependant toute autre méthode classique adaptée pour calculer les coefficients du gradient $\left[\dfrac{\partial B}{\partial X}\right]^{RL}$ convient.

Le réseau 13 comprend au moins quatre magnétomètres 15 non coplanaires. Dans un mode de réalisation, le réseau 13 est formé par quatre magnétomètres 15 agencés aux sommets d'un tétraèdre. Cependant, toute autre disposition géométrique des magnétomètres 15 du réseau 13 propre à autoriser à la fois la mesure des composantes du vecteur champ magnétique $\vec{B}^{RL}$ et la détermination des coefficients du gradient spatial $\left[\dfrac{\partial B}{\partial X}\right]^{RL}$ suivant chacun des axes du référentiel RL convient. Ainsi, selon des variantes, les magnétomètres 15 sont agencés aux sommets d'un parallélépipède, par exemple d'un cube ou aux sommets d'un polyèdre régulier ou non à condition qu'il ne soit pas plan.

Selon un mode de réalisation, les magnétomètres 15 sont des magnétomètres triaxes. En variante, seul l'un des magnétomètres est un magnétomètre triaxe, les autres magnétomètres étant uniaxes, c'est-à-dire propres à mesurer uniquement la composante du champ magnétique suivant une direction de l'espace donnée.

Avantageusement, les magnétomètres 15 formant le réseau 13 sont localisés dans l'engin spatial 1 de manière à maximiser les distances entre ces magnétomètres 15 de sorte à maximiser les différences des valeurs perceptibles du champ magnétique aux différents emplacements des magnétomètres 15. En particulier, dans le cas d'un lanceur spatial, les magnétomètres 15 sont localisés à la périphérie de la case à équipements ainsi qu'au sommet de l'étage supérieur du lanceur. Selon un mode de réalisation, chaque magnétomètre 15 est localisé dans une zone de l'engin spatial 1 compatible électromagnétiquement avec les magnétomètres 15, c'est-à-dire dans laquelle la mesure du vecteur champ magnétique terrestre $\vec{B}$ par le réseau 13 de magnétomètres 15 n'est pas ou peu perturbée.

Le dispositif d'estimation 5 comprend en outre une base de données 18, dans laquelle est mémorisé un vecteur vitesse de rotation $-\vec{\Omega}_{RI/RT}^{RI}$ de la Terre par rapport au référentiel inertiel RI, c'est-à-dire du référentiel RT par rapport au référentiel RI.

Le dispositif d'estimation 5 comprend en outre un calculateur 20. Le calculateur 20 est connecté en entrée à la centrale inertielle 7, au réseau 13 de magnétomètres 15 et à la base de données 18. Il reçoit en entrée le vecteur vitesse instantanée de rotation $\vec{\Omega}_{RL/RI}^{RL}$ mesuré par le gyromètre 9, le vecteur champ magnétique terrestre $\vec{B}^{RL}$ mesuré par le réseau 13 de magnétomètres 15 et le vecteur vitesse de rotation $-\vec{\Omega}_{RI/RT}^{RI}$ de la Terre par rapport au référentiel inertiel RI mémorisé dans la base de données 18.

De manière classique, le calculateur 20 est configuré pour estimer l'orientation de l'engin spatial 1 par rapport au référentiel inertiel RI en calculant une matrice de passage $P_{RL/RI}$. La matrice de passage $P_{RL/RI}$ définit l'orientation de l'engin spatial 1 par rapport au référentiel inertiel RI. Elle est calculée à partir du vecteur vitesse instantanée de rotation $\vec{\Omega}_{RL/RI}^{RL}$ de l'engin spatial 1.

Il est en outre configuré pour calculer le vecteur vitesse de rotation $-\vec{\Omega}_{RI/RT}^{RL}$ de la Terre par rapport au référentiel inertiel RI exprimé dans le référentiel RL, c'est-à-dire projeté sur les axes $A_{RL}$, $B_{RL}$, $C_{RL}$ du référentiel RL, à partir du vecteur vitesse de rotation $-\vec{\Omega}_{RI/RT}^{RI}$ de la Terre par rapport au référentiel inertiel RI et de l'estimation de l'orientation de l'engin spatial 1 par rapport au référentiel inertiel RI fournie par la centrale inertielle 7, et exprimée sous la forme de la matrice de passage $P_{RL/RI}$.

Le calculateur 20 reçoit en outre en entrée une donnée lui permettant d'estimer un vecteur position $\vec{X}_{RI}^{RL}$ de l'engin spatial 1 par rapport au centre du référentiel inertiel RI exprimé dans le référentiel RL. Cette donnée est par exemple le vecteur accélération spécifique $\vec{a}_{RL}$ par rapport au référentiel RL mesuré par l'accéléromètre 11. Dans ce cas, de manière connue, le calculateur 20 est configuré pour calculer un vecteur accélération spécifique $\vec{a}_{RI}^{RL}$ par rapport au référentiel inertiel RI exprimé dans le référentiel RL à partir du vecteur accélération spécifique $\vec{a}_{RL}$ mesuré par l'accéléromètre 11, de la matrice de passage $P_{RL/RI}$ définissant l'orientation de l'engin spatial 1 par rapport au référentiel inertiel RI, et par projection sur les axes du référentiel RL. Le calculateur 20 est en outre configuré pour estimer le vecteur position $\vec{X}_{RI}^{RL}$ de l'engin spatial 1 par rapport au centre du référentiel inertiel RI exprimé dans le référentiel RL par double intégration du vecteur accélération spécifique $\vec{a}_{RI}^{RL}$ de l'engin spatial 1 par rapport au référentiel inertiel RI exprimé dans le référentiel RL compensé par l'accélération due à la gravité. L'accélération due à la gravité est déterminée par un modèle de gravité enregistré dans la base de données 18 et projetée dans le référentiel RL à l'aide de la matrice de passage $P_{RL/RI}$.

En variante, la position $\vec{X}_{RI}^{RL}$ est estimée à partir de mesures par observation depuis le sol, de la triangulation depuis des positions spatiales ou terrestres connues ou par toute autre méthode connue d'estimation de la position.

En variante, la donnée d'entrée reçue par le calculateur 20 est le vecteur vitesse $\left.\dfrac{d\vec{X}^{RL}}{dt}\right|_{RI}$ de l'engin spatial 1 estimé à l'aide du dispositif d'estimation 5 à un instant de mesure précédent, la position $\vec{X}_{RI}^{RL}$ étant estimée par intégration de ce vecteur vitesse

$$\left.\frac{d\vec{X}^{RL}}{dt}\right|_{RI}.$$

Le calculateur 20 est propre à estimer, à partir de l'ensemble des données reçues en entrée, le vecteur vitesse de l'engin spatial $\left.\dfrac{d\vec{X}^{RL}}{dt}\right|_{RI}$ par rapport au référentiel inertiel RI et exprimé dans le référentiel RL. A cet effet, le calculateur 20 est propre à résoudre l'équation (1) suivante :

$$\left.\frac{d\vec{B}^{RL}}{dt}\right|_{RL} = -\left(\vec{\Omega}_{RL/RI}^{RL} + \vec{\Omega}_{RI/RT}^{RL}\right) \wedge \vec{B}^{RL} + \left[\frac{\partial B}{\partial X}\right]^{RL} \left.\frac{d\vec{X}^{RL}}{dt}\right|_{RI} + \left[\frac{\partial B}{\partial X}\right]^{RL} \left(\vec{\Omega}_{RI/RT}^{RL} \wedge \vec{X}_{RI}^{RL}\right) \quad (1)$$

dans laquelle

la grandeur que l'on cherche à estimer est $\left.\dfrac{d\vec{X}^{RL}}{dt}\right|_{RI}$, le vecteur vitesse de l'engin spatial 1 par rapport au référentiel inertiel RI exprimé dans le référentiel RL.

$\overrightarrow{X}_{RI}^{RL}$ est le vecteur position de l'engin spatial 1 par rapport au centre du référentiel inertiel RI et exprimé dans le référentiel RL.

$\vec{\Omega}_{RL/RI}^{RL}$ est le vecteur vitesse instantanée de rotation de l'engin spatial 1 par rapport au référentiel inertiel RI, exprimé dans le référentiel RL ; il correspond aux mesures réalisées par le gyromètre 9.

$\left(-\vec{\Omega}_{RI/RT}^{RL}\right)$ est le vecteur vitesse de rotation de la Terre par rapport au référentiel inertiel RI, exprimé dans le référentiel RL.

$\vec{B}^{RL}$ est le vecteur champ magnétique terrestre déduit des mesures réalisées par le réseau 13 de magnétomètres 15 dans le référentiel RL lié à l'engin spatial ; chaque magnétomètre 15 du réseau 13 donne une information sur cette grandeur; elles sont fusionnées par moyenne pondérée ou tout autre moyen de calcul.

$\left.\dfrac{d\vec{B}^{RL}}{dt}\right|_{RL}$ est la dérivée temporelle par rapport au référentiel lié à l'engin spatial RL du vecteur champ magnétique terrestre $\vec{B}$ exprimée dans le référentiel RL. Cette dérivée est déduite des mesures effectuées par le réseau 13 de magnétomètres 15. Le calculateur 20 est en particulier propre à calculer la dérivée temporelle $\left.\dfrac{d\vec{B}^{RL}}{dt}\right|_{RL}$ du champ magnétique $\vec{B}$ à partir des mesures réalisées par les magnétomètres 15 à au moins deux instants différents de mesure, en particulier deux instants consécutifs. Chaque magnétomètre 15 du réseau 13 donne une information sur la dérivée temporelle ; les informations résultant des magnétomètres 15 sont fusionnées par moyenne pondérée ou tout autre moyen de calcul.

$\left[\dfrac{\partial B}{\partial X}\right]^{RL}$ est le gradient spatial du champ magnétique terrestre $\vec{B}$ exprimé dans le référentiel RL. Ce gradient est déduit, de manière classique, des mesures réalisées par les magnétomètres 15 du réseau 13.

Le calculateur 20 est relié en sortie à une unité de commande 25 laquelle est propre à modifier des paramètres de fonctionnement de l'engin spatial 1 en fonction des informations reçues du calculateur 20, et en particulier du vecteur vitesse estimé $\left.\dfrac{d\vec{X}^{RL}}{dt}\right|_{RI}$. L'unité de commande 25 est, en variante ou en option, propre à transmettre, par l'intermédiaire d'un moyen de télétransmission, par exemple d'une antenne, le vecteur vitesse estimé $\left.\dfrac{d\vec{X}^{RL}}{dt}\right|_{RI}$ reçu du calculateur 20 à un centre d'analyse situé sur la Terre.

Le calculateur 20 est en outre propre à calculer à tout instant le vecteur position $\vec{X}_{RI}^{RL}$ de l'engin spatial 1 par rapport au centre du référentiel RI, exprimé dans le référentiel RL par intégration du vecteur vitesse $\left.\dfrac{d\vec{X}^{RL}}{dt}\right|_{RI}$ déterminé à l'instant précédent à l'aide du dispositif d'estimation 5.

L'invention a également pour objet un procédé d'estimation du vecteur vitesse $\left.\dfrac{d\vec{X}^{RL}}{dt}\right|_{RI}$ de l'engin spatial 1 muni du dispositif d'estimation 5 par rapport au référentiel inertiel RI. Ce procédé d'estimation comprend des étapes de détermination de données d'entrée et des étapes d'estimation du vecteur vitesse $\left.\dfrac{d\vec{X}^{RL}}{dt}\right|_{RI}$ à partir de ces données d'entrée.

Le procédé d'estimation comprend les étapes suivantes de détermination des données d'entrée :

- déterminer, dans une étape 100, le vecteur vitesse instantanée de rotation $\vec{\Omega}_{RL/RI}^{RL}$ de l'engin spatial 1 du référentiel RL vers le référentiel RI et exprimé dans le référentiel RL à partir des mesures réalisées par le gyromètre 9 ;
- déterminer, dans une étape 110, le vecteur champ magnétique $\vec{B}^{RL}$ créé par la Terre et exprimé dans le référentiel RL à partir des mesures réalisées par le réseau 13 de magnétomètres 15 ;

- déterminer, dans une étape 120, le vecteur position $\vec{X}_{RI}{}^{RL}$ de l'engin spatial 1 par rapport au centre du référentiel inertiel RI et exprimé dans le référentiel RL, notamment par double intégration du vecteur accélération spécifique $\vec{a}_{RI}{}^{RL}$ de l'engin spatial 1 par rapport au référentiel inertiel exprimé dans le référentiel RL obtenu à partir des mesures réalisées par l'accéléromètre 11, augmenté de l'accélération due à la gravité ou par intégration du vecteur vitesse $\left.\dfrac{d\vec{X}^{RL}}{dt}\right|_{RI}$ estimé lors d'une itération précédente du procédé d'estimation selon l'invention ; et

- fournir, dans une étape 130, le vecteur vitesse de rotation $-\vec{\Omega}_{RI/RT}{}^{RL}$ de la Terre par rapport au référentiel inertiel RI exprimé dans le référentiel RL à partir du vecteur vitesse de rotation $-\vec{\Omega}_{RI/RT}{}^{RI}$ de la Terre par rapport au référentiel inertiel RI mémorisé dans la base de données 18 et de l'estimation de l'orientation de l'engin spatial 1 définie par la matrice de passage $P_{RL/RI}$.

Le procédé d'estimation comprend en outre les étapes de :

- calculer, dans une étape 140, la dérivée temporelle $\left.\dfrac{d\vec{B}^{RL}}{dt}\right|_{RL}$ du vecteur champ magnétique $\vec{B}$ à partir du vecteur champ magnétique $\vec{B}$ mesuré par au moins l'un des magnétomètres 13 à au moins deux instants différents ;

- calculer, dans une étape 150, le gradient spatial $\left[\dfrac{\partial B}{\partial X}\right]^{RL}$ du champ magnétique $\vec{B}$, et en particulier les coefficients du gradient spatial $\left[\dfrac{\partial B}{\partial X}\right]^{RL}$ suivant chaque axe $A_{RL}$, $B_{RL}$, $C_{RL}$ du référentiel RL lié à l'engin spatial, à partir des mesures réalisées par le réseau 13 de magnétomètres 15.

Le procédé comprend en outre une étape 160 d'estimation du vecteur vitesse $\left.\dfrac{d\vec{X}^{RL}}{dt}\right|_{RI}$ de l'engin spatial 1 par rapport au référentiel inertiel RI par résolution de l'équation :

$$\left.\dfrac{d\vec{B}^{RL}}{dt}\right|_{RL} = -\left(\vec{\Omega}_{RL/RI}{}^{RL} + \vec{\Omega}_{RI/RT}{}^{RL}\right) \wedge \vec{B}^{RL} + \left[\dfrac{\partial B}{\partial X}\right]^{RL} \left.\dfrac{d\vec{X}^{RL}}{dt}\right|_{RI} + \left[\dfrac{\partial B}{\partial X}\right]^{RL} \left(\vec{\Omega}_{RI/RT}{}^{RL} \wedge \vec{X}_{RI}{}^{RL}\right)$$

où

$\vec{\Omega}_{RL/RI}{}^{RL}$ est le vecteur vitesse instantanée de rotation de l'engin spatial 1 par rapport au référentiel inertiel RI, exprimé dans le référentiel RL, déterminé à l'étape 100 ;

$\vec{B}^{RL}$ est le vecteur champ magnétique déterminé à l'étape 110 ;

$\vec{X}_{RI}{}^{RL}$ est le vecteur position de l'engin spatial 1 par rapport au centre du référentiel inertiel RI exprimé dans le référentiel RL, déterminé à l'étape 120 ;

$-\vec{\Omega}_{RI/RT}{}^{RL}$ est le vecteur vitesse de rotation du référentiel RT lié à la Terre par rapport au référentiel inertiel RI exprimé dans le référentiel RL déterminé à l'étape 130 ;

$\left.\dfrac{d\vec{B}^{RL}}{dt}\right|_{RL}$ est la dérivée temporelle du vecteur champ magnétique $\vec{B}$ calculée à l'étape 140 ; et

$\left[\dfrac{\partial B}{\partial X}\right]^{RL}$ est le gradient spatial du champ magnétique $\vec{B}$ calculé à l'étape 150.

L'invention a également pour objet un procédé d'estimation du vecteur position $\vec{X}_{RI}{}^{RL}$ de l'engin spatial 1 par rapport au centre du référentiel inertiel RI exprimé dans le référentiel RL, comprenant les étapes consistant à :

- estimer le vecteur vitesse $\left.\dfrac{d\vec{X}^{RL}}{dt}\right|_{RI}$ de l'engin spatial 1 par rapport au référentiel inertiel RI selon le procédé d'estimation décrit ci-dessus ; et

- estimer le vecteur position $\vec{X}_{RI}{}^{RL}$ de l'engin spatial 1 par intégration du vecteur vitesse $\left.\dfrac{d\vec{X}^{RL}}{dt}\right|_{RI}$ ainsi déterminé.

Le dispositif d'estimation 5 selon le deuxième mode de réalisation ne diffère du dispositif d'estimation 5 selon le premier mode de réalisation qu'en ce que le calculateur 20 est configuré pour estimer en outre un deuxième vecteur vitesse $\vec{V}_2$ de l'engin spatial et un vecteur vitesse corrigé $\vec{V}_c$. Dans ce mode de réalisation, le vecteur vitesse estimé par le calculateur 20 par résolution de l'équation (1) est appelé premier vecteur vitesse $\vec{V}_1$. Le deuxième vecteur vitesse $\vec{V}_2$ est estimé par une méthode différente de celle utilisée pour estimer le premier vecteur vitesse $\vec{V}_1$.

Ainsi, le calculateur 20 est configuré pour estimer le deuxième vecteur vitesse $\vec{V}_2$ à partir du vecteur accélération spécifique $\vec{a}_{RL}$ issu de l'accéléromètre 11. En particulier, il est propre à calculer le vecteur accélération spécifique $\vec{a}_{RI}{}^{RL}$ par rapport au référentiel inertiel RI exprimé dans le référentiel RL à partir du vecteur accélération spécifique $\vec{a}_{RL}$ par rapport au référentiel RL et de l'estimation de l'orientation de l'engin spatial 1. L'orientation de l'engin spatial 1 est définie par la matrice de passage $P_{RL/RI}$. Cette matrice est obtenue de manière classique à partir des mesures réalisées par le gyromètre 9. Il est en outre configuré pour estimer le deuxième vecteur vitesse $\vec{V}_2$ par intégration du vecteur accélération spécifique $\vec{a}_{RL}$ augmenté de l'accélération due à la gravité. Le deuxième vecteur vitesse $\vec{V}_2$ est une estimation du vecteur vitesse de l'engin 1 par rapport au référentiel inertiel exprimé dans le référentiel RL lié à l'engin spatial.

Le calculateur 20 est en outre configuré pour combiner le premier vecteur vitesse $\vec{V}_1$ et le deuxième vecteur vitesse $\vec{V}_2$ à l'aide d'un algorithme adapté de manière à en déduire le vecteur vitesse corrigé $\vec{V}_c$. A cet effet, le calculateur 20 est par exemple configuré pour combiner le premier vecteur vitesse $\vec{V}_1$ et le deuxième vecteur vitesse $\vec{V}_2$ à l'aide d'un filtre de Kalman adapté prenant en compte les caractéristiques stochastiques supposées ou modélisées de ces deux grandeurs. En variante, le calculateur 20 est configuré pour fusionner le premier vecteur vitesse $\vec{V}_1$ et le deuxième vecteur vitesse $\vec{V}_2$ par filtrage particulaire ou par toute autre méthode de fusion de données adaptée pour donner le vecteur vitesse corrigé $\vec{V}_c$.

Le vecteur vitesse corrigé $\vec{V}_c$ ainsi obtenu constitue une estimation plus précise du vecteur vitesse réel de l'engin spatial 1 que les premier et deuxième vecteurs vitesse $\vec{V}_1$ et $\vec{V}_2$ pris isolément.

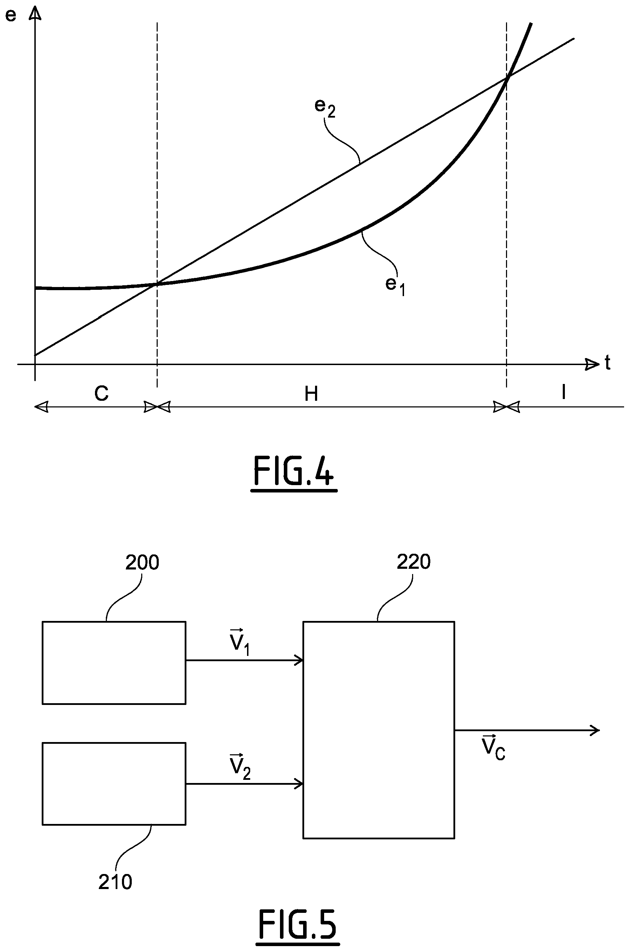

La figure 4 est un graphique représentant de manière schématique l'évolution au cours du temps de l'erreur $e_1$ entachant l'estimation du premier vecteur vitesse $\vec{V}_1$ estimé à partir des mesures réalisées par le réseau 13 de magnétomètres 15 et de l'erreur $e_2$ entachant l'estimation du deuxième vecteur vitesse $\vec{V}_2$, lorsque l'engin spatial 1 s'éloigne de la Terre. L'erreur $e_2$ ne dépend pas de la position de l'engin spatial 1 et en particulier ne dépend pas de l'éloignement de l'engin spatial 1 par rapport à la Terre. Elle augmente linéairement avec le temps. Il a été constaté que l'erreur $e_1$ est constante dans le temps. Son augmentation progressive sur le graphique de la figure 4 est due à la diminution progressive du gradient du champ magnétique terrestre lorsque l'engin spatial s'éloigne de la Terre. Les positions relatives des courbes représentant $e_1$ et $e_2$ sur le graphique de la figure 4 définissent trois zones de fonctionnement du dispositif d'estimation 5 selon le deuxième mode de réalisation.

Dans une première zone de fonctionnement, appelée phase de calage C, l'erreur $e_2$ est inférieure à l'erreur $e_1$. Cette zone de fonctionnement correspond à une phase de vol initiale de l'engin spatial 1. Dans cette première zone de fonctionnement C, le calculateur 20 est configuré pour estimer l'erreur $e_1$ du premier vecteur vitesse $\vec{V}_1$ à partir du deuxième vecteur vitesse $\vec{V}_2$ à l'aide d'un filtre de Kalman, par la méthode des moindres carrés ou toute autre méthode de fusion de données. La sortie de l'algorithme de fusion de données permet d'avoir une estimation du vecteur vitesse corrigé $\vec{V}_c$.

Dans une deuxième zone de fonctionnement, appelée phase hybride H, l'erreur $e_1$ est inférieure à l'erreur $e_2$. Dans cette deuxième zone de fonctionnement H, le calculateur 20 est configuré pour estimer l'erreur $e_2$ du deuxième vecteur vitesse $\vec{V}_2$ à partir du premier vecteur vitesse $\vec{V}_1$ à l'aide d'un filtre de Kalman, par la méthode des moindres carrés ou toute autre méthode de fusion de données. La sortie de l'algorithme de fusion de données permet d'avoir une estimation du vecteur vitesse corrigé $\vec{V}_c$.

Dans une troisième zone de fonctionnement, notée I, l'erreur $e_1$ est supérieure à l'erreur $e_2$, l'éloignement de la Terre étant tel que le gradient du champ magnétique terrestre devient trop faible pour permettre une estimation précise du premier vecteur vitesse à l'aide des mesures magnétométriques. Dans cette troisième zone de fonctionnement I, le dispositif d'estimation 5 est configuré pour identifier le vecteur vitesse de l'engin 1 au deuxième vecteur vitesse $\vec{V}_2$, l'erreur $e_1$ étant trop élevée.

La figure 5 illustre schématiquement un procédé d'estimation du vecteur vitesse corrigé $\vec{V}_c$. Ce procédé d'estimation comprend les étapes de :

- estimer, dans une étape 200, le premier vecteur vitesse $\vec{V}_1$ de l'engin spatial 1 en mettant en oeuvre le procédé d'estimation du vecteur vitesse tel que décrit en référence à la figure 3 ;
- estimer, dans une étape 210, le deuxième vecteur vitesse $\vec{V}_2$ de l'engin spatial 1 à partir du vecteur accélération spécifique $\vec{a}_{RL}$ de l'engin spatial 1 mesuré par l'accéléromètre 11 du dispositif d'estimation 5 ; et
- combiner, dans une étape 220 à l'aide d'un algorithme prédéterminé, par exemple à l'aide d'un filtre de Kalman, le premier vecteur vitesse $\vec{V}_1$ et le deuxième vecteur vitesse $\vec{V}_2$ de l'engin spatial 1 pour en déduire le vecteur vitesse corrigé $\vec{V}_c$ de l'engin spatial 1.

L'étape 210 comprend en particulier les sous-étapes de :
- calculer le vecteur accélération spécifique $\vec{a}_{RI}^{RL}$ par rapport au référentiel inertiel RI exprimé dans le référentiel RL à partir du vecteur accélération spécifique $\vec{a}_{RL}$ par rapport au référentiel RL et de l'estimation de l'orientation de l'engin spatial 1 définie par la matrice de passage $P_{RL/RI}$ obtenue de manière classique à partir des mesures réalisées par le gyromètre 9 ; et
- estimer le deuxième vecteur vitesse $\vec{V}_2$ par intégration du vecteur accélération spécifique $\vec{a}_{RL}$ augmenté de l'accélération due à la gravité.

L'équation 1 résolue par le calculateur 20 pour estimer la vitesse de l'engin spatial a été obtenue par différentiation du vecteur champ magnétique terrestre dans le référentiel lié à la Terre, en utilisant la stationnarité du champ magnétique terrestre dans le référentiel lié à la Terre pour simplifier l'égalité ainsi obtenue, puis en procédant à des changements de référentiel de manière à exprimer la vitesse dans le référentiel inertiel en fonction des grandeurs mesurées par les capteurs embarqués à bord de l'engin spatial. Il a été possible d'exprimer la vitesse de l'engin spatial dans le référentiel inertiel en fonction uniquement de grandeurs connues ou mesurables par des capteurs.

Dans tout ce qui précède, l'invention a été décrite en référence au champ magnétique terrestre. Cependant, l'invention s'applique pour tout champ magnétique produit par un astre et stationnaire dans un référentiel lié à cet astre.

Dans les modes de réalisation décrits, le calculateur 20 est embarqué à bord de l'engin spatial 1. En variante, seuls les capteurs de mesure, à savoir la centrale inertielle 7 et les magnétomètres 15 du dispositif d'estimation sont embarqués à bord de l'engin spatial 1, le calculateur 20 étant localisé sur la Terre, par exemple dans un centre d'analyse et les capteurs de mesure étant configurés pour transmettre les mesures effectuées au calculateur 20, par exemple par l'intermédiaire d'une antenne.

## Revendications

1. Engin spatial (1) muni d'un dispositif d'estimation (5) d'un vecteur vitesse $\left(\left.\dfrac{d\vec{X}^{RL}}{dt}\right|_{RI}\right)$ de l'engin spatial (1) par rapport à un référentiel inertiel (RI), le dispositif d'estimation (5) comprenant au moins un gyromètre (9) embarqué à bord de l'engin spatial (1) et propre à mesurer un vecteur vitesse instantanée de rotation $\left(\vec{\Omega}_{RL/RI}^{RL}\right)$ de l'engin spatial (1) par rapport au référentiel inertiel (RI), **caractérisé en ce que** le dispositif d'estimation (5) comprend en outre un réseau (13) de magnétomètres (15) liés à l'engin spatial (1) et espacés spatialement, propre à mesurer, dans un référentiel lié à l'engin spatial (RL), un vecteur champ magnétique ($\vec{B}^{RL}$) produit par un astre, le vecteur champ magnétique ($\vec{B}^{RL}$) produit par l'astre étant stationnaire dans un référentiel (RT) lié à l'astre et un calculateur (20), configuré pour estimer le vecteur vitesse $\left(\left.\dfrac{d\vec{X}^{RL}}{dt}\right|_{RI}\right)$ de l'engin spatial (1) par rapport au référentiel inertiel (RI), le calculateur (20) recevant en entrée une donnée lui permettant d'estimer un vecteur position de l'engin spatial par rapport au référentiel inertiel et étant configuré pour estimer le vecteur vitesse par résolution d'une équation reliant le vecteur vitesse ( $\left.\dfrac{d\vec{X}^{RL}}{dt}\right|_{RI}$ ) de l'engin spatial (1) par rapport au référentiel inertiel (RI) au vecteur vitesse

instantanée de rotation ( $\overrightarrow{\Omega}_{RL/RI}^{RL}$ ) de l'engin spatial (1) par rapport au référentiel inertiel (RI), au vecteur champ

magnétique ($\vec{B}^{RL}$) produit par l'astre, à la dérivée temporelle ( $\left.\dfrac{d\vec{B}^{RL}}{dt}\right|_{RL}$ ) et au gradient spatial ( $\left[\dfrac{\partial B}{\partial X}\right]^{RL}$ ) du

vecteur champ magnétique ($\vec{B}^{RL}$) produit par l'astre, à un vecteur position ($\vec{X}_{RI}{}^{RL}$) de l'engin spatial (1) par rapport au centre du référentiel inertiel (RI) et à un vecteur vitesse de rotation du référentiel lié à l'astre (RT) par rapport au référentiel inertiel (RI).

2. Engin spatial (1) selon la revendication 1, dans lequel le calculateur (20) est configuré pour estimer le vecteur vitesse

( $\left.\dfrac{d\vec{X}^{RL}}{dt}\right|_{RI}$ ) de l'engin spatial (1) par résolution de l'équation :

$$\left.\frac{d\vec{B}^{RL}}{dt}\right|_{RL} = -\left(\vec{\Omega}_{RL/RI}^{RL} + \vec{\Omega}_{RI/RT}^{RL}\right)\wedge \vec{B}^{RL} + \left[\frac{\partial B}{\partial X}\right]^{RL}\left.\frac{d\vec{X}^{RL}}{dt}\right|_{RI} + \left[\frac{\partial B}{\partial X}\right]^{RL}\left(\vec{\Omega}_{RI/RT}^{RL}\wedge \vec{X}_{RI}^{RL}\right)$$

où $\overrightarrow{\Omega}_{RL/RI}^{RL}$

est le vecteur vitesse instantanée de rotation de l'engin spatial (1) par rapport au référentiel inertiel (RI) exprimé dans le référentiel lié à l'engin spatial (RL), obtenu à partir des mesures réalisées par le gyromètre ;
$\vec{B}^{RL}$ est le vecteur champ magnétique exprimé dans le référentiel lié à l'engin spatial (RL) obtenu à partir des mesures réalisées par au moins l'un des magnétomètres ;

$\left.\dfrac{d\vec{B}^{RL}}{dt}\right|_{RL}$ est la dérivée temporelle du vecteur champ magnétique ($\vec{B}^{RL}$) exprimée dans le référentiel lié à l'engin spatial (RL) et déduite du vecteur champ magnétique ($\vec{B}^{RL}$) mesuré par au moins l'un des magnétomètres (15) ;

$\left[\dfrac{\partial B}{\partial X}\right]^{RL}$ est le gradient spatial du vecteur champ magnétique ($\vec{B}^{RL}$) exprimé dans le référentiel lié à l'engin spatial (RL) et déduit du vecteur champ magnétique ($\vec{B}^{RL}$) mesuré par le réseau (13) de magnétomètres (15) ;

$-\vec{\Omega}_{RI/RT}^{RL}$ est le vecteur vitesse de rotation du référentiel lié à l'astre (RT) par rapport au référentiel inertiel

(RI) exprimé dans le référentiel lié à l'engin spatial (RL) ; et

$\vec{X}_{RI}^{RL}$ est le vecteur position de l'engin spatial (1) par rapport au centre du référentiel inertiel (RI) exprimé dans le référentiel lié à l'engin spatial (RL).

3. Engin spatial (1) selon l'une des revendications 1 et 2, dans lequel le dispositif d'estimation (5) comprend en outre un accéléromètre (11), propre à mesurer un vecteur accélération spécifique ($\vec{a}_{RL}$) de l'engin spatial (1) par rapport au référentiel lié à l'engin spatial, dans lequel le calculateur (20) est propre à estimer un vecteur accélération

spécifique ( $\vec{a}_{RI}^{RL}$ ) de l'engin spatial (1) par rapport au référentiel inertiel (RI) à partir des mesures réalisées par l'accéléromètre (11) et par le gyromètre (9) et dans lequel le calculateur (20) est configuré pour estimer le vecteur position $\left( \vec{X}_{RI}^{\,RL} \right)$ de l'engin spatial (1) par rapport au centre du référentiel inertiel (RI) par double intégration du vecteur accélération spécifique $\left( \vec{a}_{RI}^{\,RL} \right)$ de l'engin spatial (1) par rapport au référentiel inertiel (RI) compensé par l'accélération due à la gravité.

4. Engin spatial (1) selon l'une quelconque des revendications précédentes, lequel engin spatial (1) est un lanceur spatial.

5. Engin spatial (1) selon l'une quelconque des revendications précédentes, dans lequel l'astre est la Terre, et dans lequel le champ magnétique ($\vec{B}^{RL}$) est le champ magnétique terrestre.

6. Engin spatial (1) selon la revendication 5, dans lequel le référentiel lié à l'astre (RT) est un référentiel équatorial géocentrique tournant avec la Terre comprenant une origine coïncidant avec le centre de masse (O) de la Terre, un axe ($A_{RT}$) contenu dans le plan de l'équateur (E) et passant par un point d'intersection de l'équateur (E) avec un méridien (M) de référence, un axe ($C_{RT}$) coïncidant avec l'axe de rotation terrestre moyen (A) et un axe ($B_{RT}$) complétant de manière directe le référentiel lié à la Terre et le référentiel inertiel (RI) est un référentiel géocentrique équatorial inertiel comprenant une origine coïncidant avec le centre de masse de la Terre et comprenant un axe ($A_{RI}$) pointant vers une étoile lointaine fixe, un axe ($C_{RI}$) coïncidant avec l'axe de rotation terrestre moyen (A) et un axe ($B_{RI}$) pointant vers une étoile lointaine fixe et complétant de manière directe le référentiel inertiel (RI).

7. Engin spatial (1) selon l'une quelconque des revendications précédentes, dans lequel le réseau (13) de magnétomètres (15) comprend quatre magnétomètres (15), la localisation des magnétomètres (15) sur l'engin spatial (1) étant choisie de manière à maximiser la distance entre les magnétomètres (15).

8. Engin spatial (1) selon la revendication 7, dans lequel les magnétomètres sont disposés aux sommets d'un polyèdre.

9. Engin spatial (1) selon l'une quelconque des revendications précédentes, dans lequel le dispositif d'estimation (5) comprend un accéléromètre (11), propre à mesurer un vecteur accélération spécifique ($\vec{a}_{RL}$) de l'engin spatial (1) par rapport au référentiel lié à l'engin spatial, dans lequel le calculateur (20) est propre à estimer un vecteur accélération spécifique $\left( \vec{a}_{RI}^{\,RL} \right)$ de l'engin spatial (1) par rapport au référentiel inertiel (RI) à partir des mesures réalisées par l'accéléromètre (11) et par le gyromètre (9) et dans lequel le calculateur (20) est configuré pour estimer un deuxième vecteur vitesse ($\vec{V}_2$) de l'engin spatial (1) par rapport au référentiel inertiel (RI) par intégration du vecteur accélération spécifique $\left( \vec{a}_{RI}^{\,RL} \right)$ de l'engin spatial (1) par rapport au référentiel inertiel (RI) compensé par l'accélération due à la gravité, le calculateur (20) étant en outre configuré pour combiner selon un algorithme prédéterminé le deuxième vecteur vitesse ($\vec{V}_2$) et le vecteur vitesse ($\vec{V}_1$) estimé à partir de la mesure du champ magnétique produit par l'astre ($\vec{B}$) pour en déduire un vecteur vitesse corrigé ($\vec{V}_c$) de l'engin spatial (1).

10. Procédé d'estimation d'un vecteur vitesse $\left( \left. \dfrac{d\vec{X}^{\,RL}}{dt} \right|_{RI} \right)$ par rapport à un référentiel inertiel d'un engin spatial (1) selon l'une quelconque des revendications 1 à 9, **caractérisé en ce qu'**il comprend les étapes de :

- déterminer le vecteur vitesse instantanée de rotation $\left( \vec{\Omega}_{RL/RI}^{\,RL} \right)$ de l'engin spatial (1) par rapport au référentiel inertiel (RI) à partir des mesures réalisées par le gyromètre (9) ;
- déterminer le vecteur champ magnétique produit par l'astre ($\vec{B}^{RL}$) à l'aide des mesures réalisées par le réseau (13) de magnétomètres (15) ;
- estimer, au moyen du calculateur (20), le vecteur position ($X_{RI}$) de l'engin spatial (1) par rapport au centre du référentiel (RI), à partir d'une donnée reçue en entrée dudit calculateur (20) ;

- estimer le vecteur vitesse $\left( \left. \dfrac{d\vec{X}^{\,RL}}{dt} \right|_{RI} \right)$ de l'engin spatial (1) par rapport au référentiel inertiel (RI) par résolution d'une équation reliant le vecteur vitesse $\left(\left.\dfrac{d\vec{X}^{RL}}{dt}\right|_{RI}\right)$ de l'engin spatial (1) par rapport au référentiel inertiel (RI) au vecteur position $\left(\overrightarrow{X}^{RL}_{RI}\right)$ de l'engin spatial (1) par rapport au centre du référentiel inertiel (RI), au vecteur vitesse instantanée de rotation $\left(\overrightarrow{\Omega}^{RL}_{RT/RI}\right)$ de l'engin spatial (1) par rapport au référentiel inertiel (RI), au vecteur vitesse de rotation $\left(-\overrightarrow{\Omega}^{RL}_{RI/RT}\right)$ du référentiel lié à l'astre (RT) par rapport au référentiel inertiel (RI), au vecteur champ magnétique ($\vec{B}^{RL}$) produit par l'astre, à la dérivée temporelle $\left(\left.\dfrac{d\vec{B}^{RL}}{dt}\right|_{RL}\right)$ et au gradient spatial $\left(\left[\dfrac{\partial B}{\partial X}\right]^{RL}\right)$ du vecteur champ magnétique ($\vec{B}^{RL}$) produit par l'astre.

**11.** Procédé d'estimation selon la revendication 10, dans lequel on estime le vecteur vitesse $\left(\left.\dfrac{d\vec{X}^{RL}}{dt}\right|_{RI}\right)$ de l'engin spatial (1) par rapport au référentiel inertiel (RI) par résolution de l'équation :

$$\left.\frac{d\vec{B}^{RL}}{dt}\right|_{RL} = -\left(\vec{\Omega}^{RL}_{RL/RI} + \vec{\Omega}^{RL}_{RI/RT}\right)\wedge \vec{B}^{RL} + \left[\frac{\partial B}{\partial X}\right]^{RL}\left.\frac{d\vec{X}^{RL}}{dt}\right|_{RI} + \left[\frac{\partial B}{\partial X}\right]^{RL}\left(\vec{\Omega}^{RL}_{RI/RT}\wedge \vec{X}^{RL}_{RI}\right)$$

où $\overrightarrow{\Omega}^{RL}_{RL/RI}$

est le vecteur vitesse instantanée de rotation de l'engin spatial (1) par rapport au référentiel inertiel (RI) exprimé dans le référentiel lié à l'engin spatial (RL), obtenu à partir des mesures réalisées par le gyromètre ;

$\vec{B}^{RL}$ est le vecteur champ magnétique exprimé dans le référentiel lié à l'engin spatial (RL) obtenu à partir des mesures réalisées par au moins l'un des magnétomètres ;

$\left.\dfrac{d\vec{B}^{RL}}{dt}\right|_{RL}$ est la dérivée temporelle du vecteur champ magnétique ($\vec{B}^{RL}$) exprimée dans le référentiel lié à l'engin spatial (RL) et déduite du vecteur champ magnétique ($\vec{B}^{RL}$) mesuré par au moins l'un des magnétomètres (15) ;

$\left[\dfrac{\partial B}{\partial X}\right]^{RL}$ est le gradient spatial du vecteur champ magnétique ($\vec{B}^{RL}$) exprimé dans le référentiel lié à l'engin spatial (RL) et déduit du vecteur champ magnétique ($\vec{B}^{RL}$) mesuré par le réseau (13) de magnétomètres (15) ;

$-\overrightarrow{\Omega}^{RL}_{RL/RT}$ est le vecteur vitesse de rotation du référentiel lié à l'astre (RT) par rapport au référentiel inertiel (RI) exprimé dans le référentiel lié à l'engin spatial (RL) ; et

$\vec{X}^{RL}_{RI}$ est le vecteur position de l'engin spatial (1) par rapport au centre du référentiel inertiel (RI) exprimé dans le référentiel lié à l'engin spatial (RL).

**12.** Procédé de détermination d'un vecteur vitesse corrigé ($\vec{V}_c$) d'un engin spatial selon la revendication 9, comprenant les étapes de :

- estimer un premier vecteur vitesse ($\vec{V}_1$) de l'engin spatial (1) en mettant en oeuvre le procédé d'estimation selon la revendication 10 ;

- estimer un deuxième vecteur vitesse ($\vec{V}_2$) de l'engin spatial (1) à partir du vecteur accélération spécifique ($\vec{a}_{RL}$) de l'engin spatial (1) par rapport au référentiel lié à l'engin spatial (RL) mesuré par l'accéléromètre (11) du dispositif d'estimation (5) ; et

- combiner, en mettant en oeuvre un algorithme prédéterminé, le premier vecteur vitesse estimé ($\vec{V}_1$) et le deuxième vecteur vitesse estimé ($\vec{V}_2$) de l'engin spatial (1) pour en déduire le vecteur vitesse corrigé ($\vec{V}_c$) de l'engin spatial (1).

**Patentansprüche**

1. Raumflugkörper (1), der mit einer Vorrichtung (5) zum Schätzen eines Geschwindigkeitsvektors ($\left.\frac{d\vec{X}^{RL}}{dt}\right|_{RI}$) des Raumflugkörpers (1) in Bezug auf ein Trägheitsbezugssystem (RI) ausgerüstet ist, wobei die Schätzvorrichtung (5) mindestens ein Gyrometer (9) umfasst, das an Bord des Raumflugkörpers (1) mitgeführt wird und geeignet ist, einen Vektor der momentanen Drehgeschwindigkeit ($\vec{\Omega}_{RL/RI}^{RL}$) des Raumflugkörpers (1) in Bezug auf das Trägheitsbezugssystem (RI) zu messen, **dadurch gekennzeichnet, dass** die Schätzvorrichtung (5) außerdem ein Netz (13) an Magnetometern (15), die mit dem Raumflugkörper (1) verbunden sind und räumlich beabstandet sind, wobei das Netz geeignet ist, in einem an den Raumflugkörper gebundenen Bezugssystem (RL) einen von einem Himmelskörper erzeugten Magnetfeldvektor ($\vec{B}^{RL}$) zu messen, wobei der von dem Himmelskörper erzeugte Magnetfeldvektor ($\vec{B}^{RL}$) in einem an den Himmelskörper gebundenen Bezugssystem (RT) stationär ist, und einen Rechner (20) umfasst, der ausgebildet ist, den Geschwindigkeitsvektor ($\left.\frac{d\vec{X}^{RL}}{dt}\right|_{RI}$) des Raumflugkörpers (1) in Bezug auf das Trägheitsbezugssystem (RI) zu schätzen, wobei der Rechner (20) eingangsseitig eine Datengröße empfängt, die ihm das Schätzen eines Positionsvektors des Raumflugkörpers in Bezug auf das Trägheitsbezugssystem gestattet, und ausgebildet ist, den Geschwindigkeitsvektor durch Lösen einer Gleichung zu schätzen, die den Geschwindigkeitsvektor ($\left.\frac{d\vec{X}^{RL}}{dt}\right|_{RI}$) des Raumflugkörpers (1) in Bezug auf ein Trägheitsbezugssystem (RI) mit dem Vektor der momentanen Drehgeschwindigkeit ($\vec{\Omega}_{RL/RI}^{RL}$) des Raumflugkörpers (1) in Bezug auf das Trägheitsbezugssystem (RI), dem vom Himmelskörper erzeugten Magnetfeldvektor ($\vec{B}^{RL}$), der zeitlichen Ableitung ($\left.\frac{d\vec{B}^{RL}}{dt}\right|_{RL}$) und dem räumlichen Gradienten ($\left[\frac{\partial B}{\partial X}\right]^{RL}$) des von dem Himmelskörper erzeugten Magnetfeldvektors ($\vec{B}^{RL}$), einem Positionsvektor ($\vec{X}_{RI}^{RL}$) des Raumflugkörpers (1) in Bezug auf das Zentrum des Trägheitsbezugssystems (RI) und einem Drehgeschwindigkeitsvektor des auf den Himmelskörper bezogenes Bezugssystem (RT) in Bezug auf das Trägheitsbezugssystem (RI verbindet.

2. Raumflugkörper (1) nach Anspruch, bei dem der Rechner (20) ausgebildet ist, den Geschwindigkeitsvektor ($\left.\frac{d\vec{X}^{RL}}{dt}\right|_{RI}$) des Raumflugkörpers (1) durch Lösen der Gleichung zu schätzen:

$$\left.\frac{d\vec{B}^{RL}}{dt}\right|_{RL} = -\left(\vec{\Omega}_{RL/RI}^{RL} + \vec{\Omega}_{RI/RT}^{RL}\right)\wedge\vec{B}^{RL} + \left[\frac{\partial B}{\partial X}\right]^{RL}\left.\frac{d\vec{X}^{RL}}{dt}\right|_{RI} + \left[\frac{\partial B}{\partial X}\right]^{RL}\left(\vec{\Omega}_{RI/RT}^{RL} \wedge \vec{X}_{RI}^{RL}\right)$$

wobei

($\vec{\Omega}_{RL/RI}^{RL}$) der Vektor der momentanen Drehgeschwindigkeit des Raumflugkörpers (1) in Bezug auf das Trägheitsbezugssystem (RI) ist, ausgedrückt in dem an den Raumflugkörper gebundenen Bezugssystem (RL) und erhalten aus den mit dem Gyrometer durchgeführten Messungen;

$\vec{B}^{RL}$ der Magnetfeldvektor ist, ausgedrückt in dem an den Raumflugkörper (RL) gebundenen Bezugssystem und erhalten aus dem von mindestens einem der Magnetometer durchgeführten Messungen;

$(\dfrac{d\vec{B}^{RL}}{dt}\Big|_{RL})$ die zeitliche Ableitung des Magnetfeldvektors ($\vec{B}^{RL}$) ist, ausgedrückt in dem an den Raumflugkörper gebundenen Bezugssystem (RL) und abgeleitet vom Magnetfeldvektor ($\vec{B}^{RL}$), der von mindestens einem der Magnetometer (15) gemessen wurde;

$(\left[\dfrac{\partial B}{\partial X}\right]^{RL})$ der räumliche Gradient des Magnetfeldvektors ($\vec{B}^{RL}$) ist, ausgedrückt in dem an den Raumflugkörper gebundenen Bezugssystem (RL) und abgeleitet vom Magnetfeldvektor ($\vec{B}^{RL}$), der von dem Netz (13) an Magnetometern (15) gemessen wird;

$(-\vec{\Omega}^{RL}_{RI/RT})$ der Vektor der Drehgeschwindigkeit des an den Himmelskörper gebundenen Bezugssystems (RT) in Bezug auf das Trägheitsbezugssystem (RI) ist, ausgedrückt in dem an den Raumflugkörper gebundenen Bezugssystem (RL); und

$\vec{X}^{RL}_{RI}$ der Positionsvektor des Raumflugkörpers (1) in Bezug auf das Zentrum des Trägheitsbezugssystems (RI) ist, ausgedrückt in dem an den Raumflugkörper gebundenen Bezugssystem (RL).

3. Raumflugkörper (1) nach einem der Ansprüche 1 und 2, bei dem die Schätzvorrichtung (5) außerdem einen Beschleunigungssensor (11) umfasst, der geeignet ist, einen spezifischen Beschleunigungsvektor ($\vec{a}_{RL}$) des Raumflugkörpers (1) in Bezug auf das an den Raumflugkörper gebundene Bezugssystem zu messen, wobei der Rechner (20) geeignet ist, einen spezifischen Beschleunigungsvektor ($\vec{a}^{RL}_{RI}$) des Raumflugkörpers (1) in Bezug auf das Trägheitsbezugssystem (RI) aus Messungen, die von dem Beschleunigungsensor (11) und dem Gyrometer (9) durchgeführt werden, zu schätzen, und der Rechner (20) ausgebildet ist, den Positionsvektor ($\vec{X}^{RL}_{RI}$) des Raumflugkörpers (1) in Bezug auf das Zentrum des Trägheitsbezugssystems (RI) durch doppelte Integration des spezifischen Beschleunigungsvektors ($\vec{a}^{RL}_{RI}$) des Raumflugkörpers (1) in Bezug auf das Trägheitsbezugssystem (RI) zu schätzen, kompensiert durch die der Schwerkraft geschuldeten Beschleunigung.

4. Raumflugkörper (1) nach einem beliebigen der vorhergehenden Ansprüche, wobei der Raumflugkörper (1) eine Trägerrakete ist.

5. Raumflugkörper (1) nach einem beliebigen der vorhergehenden Ansprüche, bei dem der Himmelskörper die Erde ist und bei dem das Magnetfeld ($\vec{B}^{RL}$) das Erdmagnetfeld ist.

6. Raumflugkörper (1) nach Anspruch 5, bei dem das an den Himmelskörper gebundene Bezugssystem (RT) ein geozentrisches äquatoriales Bezugssystem ist, das mit der Erde dreht und einen mit dem Massezentrum (O) der Erde übereinstimmenden Ursprungspunkt, eine Achse ($A_{RT}$), die in der Ebene des Äquators (E) enthalten ist und durch einen Schnittpunkt des Äquators (E) mit einem Referenzmeridian (M) hindurchgeht, eine Achse ($C_{RT}$), die mit der Achse (A) der mittleren Erddrehung übereinstimmt, und eine Achse ($B_{RT}$), die in direkter Weise das an die Erde gebundene Bezugssystem vervollständigt, umfasst, und das Trägheitsbezugssystem (RI) ein geozentrisches äquatoriales Trägheitsbezugssystem ist, das einen mit dem Massezentrum der Erde übereinstimmenden Ursprungspunkt und eine Achse ($A_{RI}$), die zu einem entfernten Fixstern gerichtet ist, eine Achse ($C_{RI}$), die mit der Achse der mittleren Erddrehung (A) übereinstimmt, und eine Achse ($B_{RI}$), die zu einem entfernten Fixstern gerichtet ist und in direkter Weise das Trägheitsbezugssystem (RI) vervollständigt, umfasst.

7. Raumflugkörper (1) nach einem beliebigen der vorhergehenden Ansprüche, bei dem das Netz (13) an Magnetometern (15) vier Magnetometer umfasst, wobei die Positionierung der Magnetometer (15) an dem Raumflugkörper (1) so gewählt ist, dass der Abstand zwischen den Magnetometern (15) maximiert wird.

8. Raumflugkörper (1) nach Anspruch 7, bei dem die Magnetometer an den Scheitelpunkten eines Polyeders angeordnet sind.

9. Raumflugkörper (1) nach einem beliebigen der vorhergehenden Ansprüche, bei dem die Schätzvorrichtung (5) einen Beschleunigungssensor (11) umfasst, der geeignet ist, einen spezifischen Beschleunigungsvektor ($\vec{a}_{RL}$) des Raum-flugkörpers (1) in Bezug auf das an den Raumflugkörper gebundene Bezugssystem zu messen, wobei der Rechner (20) geeignet ist, einen spezifischen Beschleunigungsvektor ($\vec{a}_{RI}^{RL}$) des Raumflugkörpers (1) in Bezug auf das Trägheitsbezugssystem (RI) aus Messungen zu schätzen, die von dem Beschleunigungssensor (11) und dem Gyrometer (9) durchgeführt werden, und bei dem der Rechner (20) ausgebildet ist, einen zweiten Geschwindig-keitsvektor ($\vec{V}_2$) des Raumflugkörpers (1) in Bezug auf das Trägheitsbezugssystem (RI) durch Integration des spe-zifischen Beschleunigungsvektors ($\vec{a}_{RI}^{RL}$) des Raumflugkörpers (1) in Bezug auf das Trägheitsbezugssystem (RI), kompensiert durch die der Schwerkraft geschuldeten Beschleunigung, zu schätzen, wobei der Rechner (20) außerdem ausgebildet ist, den zweiten Geschwindigkeitsvektor ($\vec{V}_2$) und den Geschwindigkeitsvektor ($\vec{V}_1$), der aus der Messung des von dem Himmelskörper ($\vec{B}$) erzeugten Magnetfeldes geschätzt ist, gemäß einem vorbestimmten Algorithmus zu kombinieren, um daraus einen korrigierten Geschwindigkeitsvektor ($\vec{V}_c$) des Raumflugkörpers (1) herzuleiten.

10. Verfahren zum Schätzen eines Geschwindigkeitsvektors ($\frac{d\vec{X}^{RL}}{dt}\Big|_{RI}$) in Bezug auf ein Trägheitsbezugssystem eines Raumflugkörpers (1) gemäß einem beliebigen der Ansprüche 1 bis 9, **dadurch gekennzeichnet, dass** es die folgenden Schritte umfasst:

- Bestimmen des Vektors der momentanen Drehgeschwindigkeit ($\vec{\Omega}_{RL/RI}^{RL}$) des Raumflugkörpers (1) in Bezug auf das Trägheitsbezugssystem (RI) aus den von dem Gyrometer (9) durchgeführten Messungen;
- Bestimmen des durch den Himmelskörper ($\vec{B}^{RL}$) erzeugten Magnetfeldvektors mittels Messungen, die von einem Netz (13) an Magnetometern (15) durchgeführt werden;
- Schätzen des Positionsvektors ($X_{RI}$) des Raumflugkörpers (1) mittels eines Rechners (20) in Bezug auf das Zentrum des Bezugssystems (RI) aus einer am Rechner (20) eingangsseitig empfangenen Datengröße;
- Schätzen des Geschwindigkeitsvektors ($\frac{d\vec{X}^{RL}}{dt}\Big|_{RI}$) des Raumflugkörpers (1) in Bezug auf das Trägheitsbezugssystem (RI) durch Lösen einer Gleichung, die den Geschwindigkeitsvektor ($\frac{d\vec{X}^{RL}}{dt}\Big|_{RI}$) des Raumflugkör-pers (1) in Bezug auf das Trägheitsbezugssystem (RI) mit dem Positionsvektor ($X_{RI}^{RL}$) des Raumflugkörpers (1) in Bezug auf das Zentrum des Trägheitsbezugssystems (RI), dem Vektor der momentanen Drehgeschwin-digkeit ($\vec{\Omega}_{RT/RI}^{RL}$) des Raumflugkörpers (1) in Bezug auf das Trägheitsbezugssystem (RI), dem Drehgeschwin-digkeitsvektor ($-\vec{\Omega}_{RI/RT}^{RL}$) des an den Himmelskörper gebundenen Bezugssystems (RT) in Bezug auf das Trägheitsbezugssystem (RI), dem von dem Himmelskörper erzeugten Magnetfeldvektor ($\vec{B}_{RL}$), der zeitlichen Ableitung ($\frac{d\vec{B}^{RL}}{dt}\Big|_{RL}$) und dem räumlichen Gradienten ($\left[\frac{\partial B}{\partial X}\right]^{RL}$) des von dem Himmelskörper erzeugten Magnetfeldes ($\vec{B}^{RL}$) verknüpft.

11. Verfahren zum Schätzen nach Anspruch 10, bei dem der Geschwindigkeitsvektor ($\frac{d\vec{X}^{RL}}{dt}\Big|_{RI}$) des Raumflugkörpers (1) in Bezug auf das Trägheitsbezugssystem (RI) durch die Lösung der Gleichung geschätzt wird:

$$\frac{d\vec{B}^{RL}}{dt}\Big|_{RL} = -\left(\vec{\Omega}_{RL/RI}^{RL} + \vec{\Omega}_{RI/RT}^{RL}\right) \wedge \vec{B}^{RL} + \left[\frac{\partial B}{\partial X}\right]^{RL} \frac{d\vec{X}^{RL}}{dt}\Big|_{RI} + \left[\frac{\partial B}{\partial X}\right]^{RL} \left(\vec{\Omega}_{RI/RT}^{RL} \wedge \vec{X}_{RI}^{RL}\right)$$

wobei

($\vec{\Omega}_{RL/RI}^{RL}$) der Vektor der momentanen Drehgeschwindigkeit des Raumflugkörpers (1) in Bezug auf das Trägheitsbezugssystem (RI) ist, ausgedrückt in dem an den Raumflugkörper gebundenen Bezugssystem (RL) und erhalten aus den mit dem Gyrometer durchgeführten Messungen;

$\vec{B}^{RL}$ der Magnetfeldvektor ist, ausgedrückt in dem an den Raumflugkörper (RL) gebundenen Bezugssystem und erhalten aus dem von mindestens einem der Magnetometer durchgeführten Messungen;

$(\dfrac{d\vec{B}^{RL}}{dt}\Big|_{RL})$ die zeitliche Ableitung des Magnetfeldvektors ($\vec{B}^{RL}$) ist, ausgedrückt in dem an den Raumflugkörper gebundenen Bezugssystem (RL) und abgeleitet vom Magnetfeldvektor ($\vec{B}^{RL}$), der von mindestens einem der Magnetometer (15) gemessen wurde;

$(\left[\dfrac{\partial B}{\partial X}\right]^{RL})$ der räumliche Gradient des Magnetfeldvektors ($\vec{B}^{RL}$) ist, ausgedrückt in dem an den Raumflugkörper gebundenen Bezugssystem (RL) und abgeleitet vom Magnetfeldvektor ($\vec{B}^{RL}$), der von dem Netz (13) an Magnetometern (15) gemessen wird;

$(-\vec{\Omega}_{RI/RT}^{RL})$ der Vektor der Drehgeschwindigkeit des an den Himmelskörper gebundenen Bezugssystems (RT) in Bezug auf das Trägheitsbezugssystem (RI) ist, ausgedrückt in dem an den Raumflugkörper gebundenen Bezugssystem (RL); und

$\vec{X}_{RI}^{RL}$ der Positionsvektor des Raumflugkörpers (1) in Bezug auf das Zentrum des Trägheitsbezugssystems (RI) ist, ausgedrückt in dem an den Raumflugkörper gebundenen Bezugssystem (RL).

12. Verfahren zum Bestimmen eines korrigierten Geschwindigkeitsvektors ($\vec{V}_c$) eines Raumflugkörpers nach Anspruch 9, die Schritte umfassend:

- Schätzen eines ersten Geschwindigkeitsvektors ($\vec{V}_1$) des Raumflugkörpers (1), wobei das Schätzverfahren nach Anspruch 10 durchgeführt wird;
- Schätzen eines zweiten Geschwindigkeitsvektors ($\vec{V}_2$) des Raumflugkörpers (1) aus dem spezifischen Beschleunigungsvektor ($\vec{a}_{RL}$) des Raumflugkörpers (1) in Bezug auf das an den Raumflugkörper gebundene Bezugssystem (RL), der mittels des Beschleunigungssensors (11) der Schätzvorrichtung (5) gemessen wird; und
- Kombinieren des ersten geschätzten Geschwindigkeitsvektors ($\vec{V}_1$) und des zweiten geschätzten Geschwindigkeitsvektors ($\vec{V}_2$) des Raumflugzeugs (1), wobei ein vorbestimmter Algorithmus ausgeführt wird, um daraus den korrigierten Geschwindigkeitsvektor ($\vec{V}_c$) des Raumflugkörpers (1) herzuleiten.

**Claims**

1. Spacecraft (1) provided with an estimating device (5) for estimating a velocity vector ($\dfrac{d\vec{X}^{RL}}{dt}\Big|_{RI}$) of the spacecraft (1) relative to an inertial reference frame (RI), the estimating device (5) comprising at least one gyrometer (9) on board the spacecraft (1) and capable of measuring an instantaneous rotational velocity vector ($\vec{\Omega}_{RL/RI}^{RL}$) of the spacecraft (1) relative to the inertial reference frame (RI), **characterised in that** the estimating device (5) further comprises a system (13) of spatially spaced magnetometers (15) which are associated with the spacecraft (1) and are capable of measuring, in a reference frame associated with the spacecraft (RL), a magnetic field vector ($\vec{B}^{RL}$) produced by a celestial body, the magnetic field vector ($\vec{B}^{RL}$) produced by the celestial body being stationary in a reference frame (RT) associated with the celestial body, and a computer (20) configured to estimate the velocity vector ($\dfrac{d\vec{X}^{RL}}{dt}\Big|_{RI}$) of the spacecraft (1) relative to the inertial reference frame (RI), the computer (20) receiving as input data which allows it to estimate a position vector of the spacecraft relative to the inertial reference frame and being configured to estimate the velocity vector by solving an equation relating the velocity vector ($\dfrac{d\vec{X}^{RL}}{dt}\Big|_{RI}$) of the spacecraft (1) relative to the inertial reference frame (RI) to the instantaneous rotational velocity vector ($\vec{\Omega}_{RL/RI}^{RL}$) of the spacecraft (1) relative to the inertial reference frame (RI), to the magnetic field vector ($\vec{B}^{RL}$) produced by the celestial body, to the time derivative $\left(\frac{d\vec{B}^{RL}}{dt}\Big|_{RL}\right)$ and to the spatial gradient $\left(\left[\frac{\partial B}{\partial X}\right]^{RL}\right)$ of the magnetic field vector ($\vec{B}^{RL}$) produced by the celestial body, to a position vector ($\vec{X}^{RL}_{RI}$) of the spacecraft (1) relative to the centre of the inertial reference frame (RI) and to a rotational velocity vector of the reference frame associated with the celestial body (RT) relative to the inertial reference frame (RI).

2.  Spacecraft (1) according to claim 1, wherein the computer (20) is configured to estimate the velocity vector $\left(\frac{d\vec{X}^{RL}}{dt}\Big|_{RI}\right)$ of the spacecraft (1) by solving the equation:

$$\frac{d\vec{B}^{RL}}{dt}\Bigg|_{RL} = -\left(\vec{\Omega}^{RL}_{RL/RI} + \vec{\Omega}^{RL}_{RI/RT}\right)\wedge\vec{B}^{RL} + \left[\frac{\partial B}{\partial X}\right]^{RL}\frac{d\vec{X}^{RL}}{dt}\Bigg|_{RI} + \left[\frac{\partial B}{\partial X}\right]^{RL}\left(\vec{\Omega}^{RL}_{RI/RT}\wedge\vec{X}^{RL}_{RI}\right)$$

wherein

$\vec{\Omega}^{RL}_{RL/RI}$ is the instantaneous rotational velocity vector of the spacecraft (1) relative to the inertial reference frame (RI) expressed in the reference frame associated with the spacecraft (RL), obtained from the measurements made by the gyrometer;

$\vec{B}^{RL}$ is the magnetic field vector expressed in the reference frame associated with the spacecraft (RL) obtained from the measurements made by at least one of the magnetometers;

$\frac{d\vec{B}^{RL}}{dt}\Big|_{RL}$ is the time derivative of the magnetic field vector ($\vec{B}^{RL}$) expressed in the reference frame associated with the spacecraft (RL) and derived from the magnetic field vector ($\vec{B}^{RL}$) measured by at least one of the magnetometers (15);

$\left[\frac{\partial B}{\partial X}\right]^{RL}$ is the spatial gradient of the magnetic field vector ($\vec{B}^{RL}$) expressed in the reference frame associated with the spacecraft (RL) and derived from the magnetic field vector ($\vec{B}^{RL}$) measured by the system (13) of magnetometers (15);

$-\vec{\Omega}^{RL}_{RI/RT}$ is the rotational velocity vector of the reference frame associated with the celestial body (RT) relative to the inertial reference frame (RI) expressed in the reference frame associated with the spacecraft (RL); and

$\vec{X}^{RL}_{RI}$ is the position vector of the spacecraft (1) relative to the centre of the inertial reference frame (RI) expressed in the reference frame associated with the spacecraft (RL).

3.  Spacecraft (1) according to either claim 1 or claim 2, wherein the estimating device (5) further comprises an accelerometer (11) capable of measuring a specific acceleration vector ($\vec{a}_{RL}$) of the spacecraft (1) relative to the reference frame associated with the spacecraft, wherein the computer (20) is capable of estimating a specific acceleration vector ($\vec{a}^{RL}_{RI}$) of the spacecraft (1) relative to the inertial reference frame (RI) from the measurements made by the accelerometer (11) and by the gyrometer (9), and wherein the computer (20) is configured to estimate the position vector ($\vec{X}^{RL}_{RI}$) of the spacecraft (1) relative to the centre of the inertial reference frame (RI) by double integration of the specific acceleration vector ($\vec{a}^{RL}_{RI}$) of the spacecraft (1) relative to the inertial reference frame (RI) compensated by acceleration due to gravity.

4.  Spacecraft (1) according to any one of the preceding claims, which spacecraft (1) is a space launcher.

5.  Spacecraft (1) according to any one of the preceding claims, wherein the celestial body is the Earth, and wherein the magnetic field ($\vec{B}^{RL}$) is the terrestrial magnetic field.

6.  Spacecraft (1) according to claim 5, wherein the reference frame associated with the celestial body (RT) is a geocentric equatorial reference frame rotating with the Earth, comprising an origin which coincides with the centre of mass (O) of the earth, an axis ($A_{RT}$) contained in the plane of the equator (E) and passing through a point of intersection of the equator (E) with a reference meridian (M), an axis ($C_{RT}$) coinciding with the mean terrestrial rotational axis (A), and an axis ($B_{RT}$) which directly complements the reference frame associated with the Earth, and the inertial reference frame (RI) is an inertial geocentric equatorial reference frame comprising an origin which coincides with the centre of mass of the Earth and comprising an axis ($A_{RI}$) pointing towards a distant fixed star, an axis ($C_{RI}$) coinciding with the mean terrestrial rotational axis (A) and an axis ($B_{RI}$) which points towards a distant fixed star and directly complements the inertial reference frame (RI).

7. Spacecraft (1) according to any one of the preceding claims, wherein the system (13) of magnetometers (15) comprises four magnetometers (15), the location of the magnetometers (15) on the spacecraft (1) being chosen so as to maximise the distance between the magnetometers (15).

8. Spacecraft (1) according to claim 7, wherein the magnetometers are arranged at the vertices of a polyhedron.

9. Spacecraft (1) according to any one of the preceding claims, wherein the estimating device (5) comprises an accelerometer (11) capable of measuring a specific acceleration vector ($\vec{a}_{RL}$) of the spacecraft (1) relative to the reference frame associated with the spacecraft, wherein the computer (20) is capable of estimating a specific acceleration vector ($\vec{a}_{RI}^{RL}$) of the spacecraft (1) relative to the inertial reference frame (RI) from the measurements made by the accelerometer (11) and by the gyrometer (9), and wherein the computer (20) is configured to estimate a second velocity vector ($\vec{V}_2$) of the spacecraft (1) relative to the inertial reference frame (RI) by integrating the specific acceleration vector ($\vec{a}_{RI}^{RL}$) of the spacecraft (1) relative to the inertial reference frame (RI) compensated by acceleration due to gravity, the computer (20) further being configured to combine, in accordance with a predetermined algorithm, the second velocity vector ($\vec{V}_2$) and the velocity vector ($\vec{V}_1$) estimated from the measurement of the magnetic field produced by the celestial body ($\vec{B}$) in order to derive therefrom a corrected velocity vector ($\vec{V}_c$) of the spacecraft (1).

10. Method for estimating a velocity vector ($\frac{d\vec{X}^{RL}}{dt}\big|_{RI}$) relative to an inertial reference frame of a spacecraft (1) according to any one of claims 1 to 9, **characterised in that** it comprises the steps of:

- determining the instantaneous rotational velocity vector ($\vec{\Omega}_{RL/RI}^{RL}$) of the spacecraft (1) relative to the inertial reference frame (RI) from the measurements made by the gyrometer (9);
- determining the magnetic field vector produced by the celestial body ($\vec{B}^{RL}$) with the aid of the measurements made by the system (13) of magnetometers (15);
- estimating, by means of a computer (20), the position vector ($\vec{X}_{RI}^{RL}$) of the spacecraft (1) relative to the centre of the reference frame (RI) from data received as input of said computer (20);

- estimating the velocity vector ($\frac{d\vec{X}^{RL}}{dt}\big|_{RI}$) of the spacecraft (1) relative to the inertial reference frame (RI) by solving an equation relating the velocity vector ($\frac{d\vec{X}^{RL}}{dt}\big|_{RI}$) of the spacecraft (1) relative to the inertial reference frame (RI) to the position vector ($\vec{X}_{RI}^{RL}$) of the spacecraft (1) relative to the centre of the inertial reference frame (RI), to the instantaneous rotational velocity vector ($\vec{\Omega}_{RT/RI}^{RL}$) of the spacecraft (1) relative to the inertial reference frame (RI), to the rotational velocity vector ($-\vec{\Omega}_{RI/RT}^{RL}$) of the reference frame associated with the celestial body (RT) relative to the inertial reference frame (RI), to the magnetic field vector ($\vec{B}^{RL}$) produced by the celestial body, to the time derivative ($\frac{d\vec{B}^{RL}}{dt}\big|_{RL}$) and to the spatial gradient ($[\frac{\partial B}{\partial X}]^{RL}$) of the magnetic field vector ($\vec{B}^{RL}$) produced by the celestial body.

11. Estimation method according to claim 10, wherein the velocity vector ($\frac{d\vec{X}^{RL}}{dt}\big|_{RI}$) of the spacecraft (1) relative to the inertial reference frame (RI) is estimated by solving the equation:

$$\frac{d\vec{B}^{RL}}{dt}\bigg|_{RL} = -\left(\vec{\Omega}_{RL/RI}^{RL} + \vec{\Omega}_{RI/RT}^{RL}\right) \wedge \vec{B}^{RL} + \left[\frac{\partial B}{\partial X}\right]^{RL} \frac{d\vec{X}^{RL}}{dt}\bigg|_{RI} + \left[\frac{\partial B}{\partial X}\right]^{RL} \left(\vec{\Omega}_{RI/RT}^{RL} \wedge \vec{X}_{RI}^{RL}\right)$$

wherein

$\vec{\Omega}_{RL/RI}^{RL}$ is the instantaneous rotational velocity vector of the spacecraft (1) relative to the inertial reference frame (RI) expressed in the reference frame associated with the spacecraft (RL), obtained from the measurements made by the gyrometer; $\vec{B}^{RL}$ is the magnetic field vector expressed in the reference frame associated with the spacecraft (RL) obtained from the measurements made by at least one of the magnetometers;

$\left.\dfrac{d\vec{B}^{RL}}{dt}\right|_{RL}$ is the time derivative of the magnetic field vector ($\vec{B}^{RL}$) expressed in

the reference frame associated with the spacecraft (RL) and derived from the magnetic field vector ($\vec{B}^{RL}$) measured by at least one of the magnetometers (15);

$\left[\dfrac{\partial B}{\partial X}\right]^{RL}$ is the spatial gradient of the magnetic field vector ($\vec{B}^{RL}$) expressed in the reference frame associated with the spacecraft (RL) and derived from the magnetic field vector ($\vec{B}^{RL}$) measured by the system (13) of magnetometers (15);

$-\vec{\Omega}_{RL/RT}^{RL}$ is the rotational velocity vector of the reference frame associated with the celestial body (RT) relative to the inertial reference frame (RI) expressed in the reference frame associated with the spacecraft (RL); and

$\vec{X}_{RI}^{RL}$ is the position vector of the spacecraft (1) relative to the centre of the inertial reference frame (RI) expressed in the reference frame associated with the spacecraft (RL).

**12.** Method for determining a corrected velocity vector ($\vec{V}_c$) of a spacecraft according to claim 9, comprising the steps of:

- estimating a first velocity vector ($\vec{V}_1$) of the spacecraft (1) by carrying out the estimation method according to claim 10;
- estimating a second velocity vector ($\vec{V}_2$) of the spacecraft (1) from the specific acceleration vector ($\vec{\alpha}_{RL}$) of the spacecraft (1) relative to the reference frame associated with the spacecraft (RL) measured by the accelerometer (11) of the estimating device (5); and
- combining, by carrying out a predetermined algorithm, the estimated first velocity vector ($\vec{V}_1$) and the estimated second velocity vector ($\vec{V}_2$) of the spacecraft (1) in order to derive therefrom the corrected velocity vector ($\vec{V}_c$) of the spacecraft (1).

## FIG.1

## FIG.3

## FIG.2

EP 2 541 199 B1

$$\underline{\text{FIG.4}}$$

$$\underline{\text{FIG.5}}$$

**EP 2 541 199 B1**

**RÉFÉRENCES CITÉES DANS LA DESCRIPTION**

**Documents brevets cités dans la description**

- EP 2048475 A

- FR 2914739